# EUROPÄISCHE PATENTSCHRIFT

(11) **EP 1 727 724 B1**
(45) Veröffentlichungstag und Bekanntmachung des Hinweises auf die Patenterteilung: **25.06.2008**
(21) Anmeldenummer: 05715476.7
(22) Anmeldetag: 23.02.2005
(51) Int. Cl.: B62D 5/083

(54) **SERVOLENKUNG MIT HYDRAULISCHER MOMENTENÜBERLAGERUNG**
POWER STEERING MECHANISM FEATURING HYDRAULIC SUPERPOSITION OF MOMENTS
DIRECTION ASSISTEE A SUPERPOSITION HYDRAULIQUE DES COUPLES

(30) Priorität: 23.03.2004 DE 102004014529; 20.07.2004 DE 102004035094
(43) Veröffentlichungstag der Anmeldung: 06.12.2006
(73) Patentinhaber: ThyssenKrupp Presta SteerTec GmbH, 40476 Düsseldorf (DE)
(72) Erfinder: RACHEL, Rüdiger, 73650 Winterbach (DE); SCHIEK, Bernd, 73650 Winterbach (DE); STEHLI, Thomas, 73631 Aichtal-Aich (DE); SPEIDEL, Gerd, 73650 Winterbach (DE); FOLLER, Günther, 53545 Linz a. Rhein (DE)
(74) Vertreter: LENZING GERBER
(86) Internationale Anmeldenummer: PCT/EP2005/001885
(87) Internationale Veröffentlichungsnummer: WO 2005/095178

(56) Entgegenhaltungen:
- DE-B3- 10 254 688
- DE-C1- 19 616 439
- US-A- 4 651 622
- US-B1- 6 227 244
- PATENT ABSTRACTS OF JAPAN Bd. 012, Nr. 378 (M-751), 11. Oktober 1988 (1988-10-11) -& JP 63 130475 A (TOYODA MACH WORKS LTD), 2. Juni 1988 (1988-06-02)
- PATENT ABSTRACTS OF JAPAN Bd. 1998, Nr. 01, 30. Januar 1998 (1998-01-30) -& JP 09 254801 A (TOYOTA MOTOR CORP), 30. September 1997 (1997-09-30)

## Beschreibung

Die vorliegende Erfindung betrifft eine hydraulische Servolenkung für Kraftfahrzeuge.

Hydraulische Servolenkungen mit einer Rückwirkungsanordnung sind aus dem Stand der Technik bekannt, beispielsweise aus der DE 196 16 439 C1. Bei dieser Lenkung liegen Rückwirkungskörper in Form von Kugeln in V-förmigen Nuten ein, die in Radialrichtung des Drehschiebers nach außen offen sind. Die Rückwirkungskörper liegen in der kräftefreien Mittelstellung des Drehschieberventils an beiden Nutenflanken an. Bei einer Auslenkung des Drehschieberventils gegen die Federkraft des Drehstabs werden die Kugeln nur an einer Flanke der V-förmigen Nuten anliegen. Die Kugeln werden von außen mit Hydraulikdruck beaufschlagt und in die Nuten gedrängt, so dass sie zusammen mit der geneigten Nutenflanke, an der sie anliegen, ein Rückstellmoment in Richtung auf die kräftefreie Mittelstellung des Ventils wirken. Die Lenkung des Kraftfahrzeugs erzeugt dadurch ein höheres Handmoment am Lenkrad und fühlt sich dadurch direkter an.

Diese Lenkung ist nur dazu vorgesehen und eingerichtet, Rückstellmomente in Richtung auf die Mittelstellung des Drehschieberventils zu erzeugen.

Das Dokument JP 09 254801 offenbart eine Servolenkung für Kraftfahrzeuge, mit einem von einem Fahrer manuell zu betätigenden Ventil, welches eine hydraulisch beaufschlagbare Rückwirkungsanordnung mit Rückwirkungskörpern aufweist, wobei ein erster Rückwirkungskörper und ein zweiter Rückwirkungskörper derart ausgerichtet sind, daß eine Beaufschlagung mit Hydraulikdruck in der Mittellage und der Mittellage benachbarter Stellung des Ventils bei dem ersten Ruckwirkungskörper ein Drehmoment in einem ersten Drehsinn und bei dem zweiten Rückwirkungskörper ein Drehmoment in einem zweiten, dem ersten Drehsinn entgegen gerichteten Drehsinn erzeugt.

Andere aus der Praxis bekannte Lenkungen weisen außer einem elektrischen oder hydraulischen Servoantrieb noch einen Hilfsantrieb auf, der über ein Überlagerungsgetriebe Lenkimpulse in die Lenksäule des Kraftfahrzeugs einleiten kann. Diese Lenkungen sind sehr komplex und beanspruchen einen großen Bauraum, da neben dem eigentlichen Servoantrieb noch ein zweiter Hilfsantrieb mit Getriebe erforderlich ist.

Es ist deshalb Aufgabe der vorliegenden Erfindung, eine hydraulische Servolenkung mit Rückwirkungsanordnung dahingehend zu modifizieren, dass eine Aufprägung eines zusätzlichen Drehmoments auf die Lenkung ohne einen zweiten Aktuator möglich wird.

Diese Aufgabe wird von einer Servolenkung mit den Merkmalen des Anspruchs 1 gelöst.

Wenn wenigstens ein erster Rückwirkungskörper und wenigstens ein zweiter Rückwirkungskörper derart zu den ihnen zugeordneten Rückwirkungsnuten ausgerichtet sind, dass eine Beaufschlagung mit Hydraulikdruck zumindest in der Mittellage und der Mittellage benachbarter Stellung des Ventils bei dem ersten Rückwirkungskörper ein Drehmoment in einem ersten Drehsinn und bei dem zweiten Rückwirkungskörper ein Drehmoment in einem zweiten, dem ersten Drehsinn entgegen gerichteten Drehsinn erzeugt, kann durch gleichzeitige Druckbeaufschlagung beider Rückwirkungskörper eine Mittenzentrierung der Lenkung und durch einseitige Druckbeaufschlagung eines Rückwirkungskörpers ein Lenkmoment in einer bestimmten Richtung erzeugt werden.

Die abhängigen Patentansprüche beschreiben vorteilhafte Ausgestaltungen der Erfindung.

Nachfolgend wird ein Ausführungsbeispiel der vorliegenden Erfindung anhand der Zeichnung beschrieben. Es zeigen:
- Figur 1:: ein Drehschieberventil einer erfindungsgemäßen Servolenkung in einem Querschnitt von der Seite;
- Figur 2:: das Drehschieberventil gemäß Figur 1 in einem Querschnitt in Radialrichtung entlang der Linie II-II aus Figur 1;
- Figur 3:: dem Bereich III der Figur 2 in einer vergrößerten ausschnittsweisen Darstellung;
- Figur 4:: einen hydraulischen Schaltplan für eine erfindungsgemäße Servolenkung mit einem Servoventil mit offener Mitte;
- Figur 5:: einen Schaltplan entsprechend Figur 4 in einer einfacheren Ausführung;
- Figur 6:: einen Schaltplan für ein Servoventil mit geschlossener Mitte; sowie
- Figur 7:: einen hydraulischen Schaltplan für eine erfindungsgemäße Servolenkung mit einem Servoventil mit offener Mitte und elektromechanischen Druckminderungsventilen.

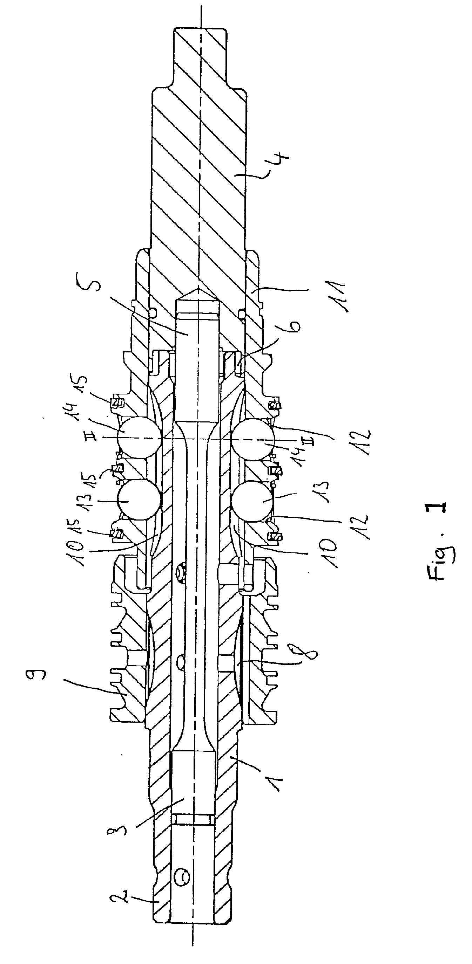

In der Figur 1 ist ein Drehschieberventil 1 einer erfindungsgemäßen Servolenkung in einem Querschnitt von der Seite dargestellt. Das Drehschieberventil 1 weist einen Drehschieber 2 auf, der im Bereich einer Verzahnung (in Fig. 1 links) mit einer Lenksäule und einem Lenkrad eines Kraftfahrzeugs zu verbinden ist. Im Innern des Drehschiebers 2 befindet sich ein Drehstab 3, der im Bereich der Verzahnung mit dem Drehschieber 2 drehfest verstiftet ist. An seinem gegenüberliegenden Ende weist das Drehschieberventil 1 ein Ritzel 4 auf, das in Betrieb mit einer nicht dargestellten Zahnstange der Servolenkung kämmt. Der Drehstab 3 ist an seinem Ende 5 mit dem Ritzel 4 ebenfalls drehfest verstiftet, so dass der Drehschieber 2 und das Ritzel 4 gegen die Torsionsfederkraft des Drehstabs 3 gegeneinander verdrehbar sind. Der Drehschieber 2 ist zu diesem Zweck drehbar gelagert. Ein mechanischer Anschlag 6 begrenzt den möglichen relativen Drehwinkel.

Die Beaufschlagung eines Servomotors mit Hydraulikdruck geschieht in an sich bekannter Weise über Steuernuten 8 und eine Steuerbüchse 9, die nicht weiter beschrieben werden müssen.

Der Drehschieber 2 trägt weiter eine Anzahl von Rückwirkungsnuten 10, die radial nach außen offen sind und die im Querschnitt etwa v-förmig ausgebildet sind. Eine mit dem Ritzel 4 verbundene Hülse 11 umgibt dabei den Drehschieber 2 im Bereich der Rückwirkungsnuten 10. Die Hülse 11 weist eine Anzahl von Bohrungen 12 auf, in die jeweils ein Rückwirkungskörper 13, 14 eingelegt ist. Die Rückwirkungskörper 13 und 14 sind bei diesem Ausführungsbeispiel Kugeln, die bei einer radial von außen einwirkenden Kraft in die Rückwirkungsnuten 10 gedrängt werden.

Die insoweit beschriebene Anordnung ist etwa rotationssymmetrisch ausgeführt. Insbesondere sind die Steuerbüchse 9 und die Hülse 11 drehbar in einem äußeren Ventilgehäuse, das hier nicht dargestellt ist, gelagert. Umlaufende Dichtungen 15 trennen dabei den in Figur 1 linken Satz von Rückwirkungskörpern 13 von dem in Figur 1 rechten Satz von Rückwirkungskörpern 14, in dem die äußeren gemeinsam mit dem nicht dargestellten Gehäuse definierten Räume voneinander getrennt werden.

Diese äußeren Räume können im Betrieb mit Hydraulikdruck beaufschlagt werden, welcher dann die Rückwirkungskörper 13 und 14 in die Rückwirkungsnuten 10 drängt.

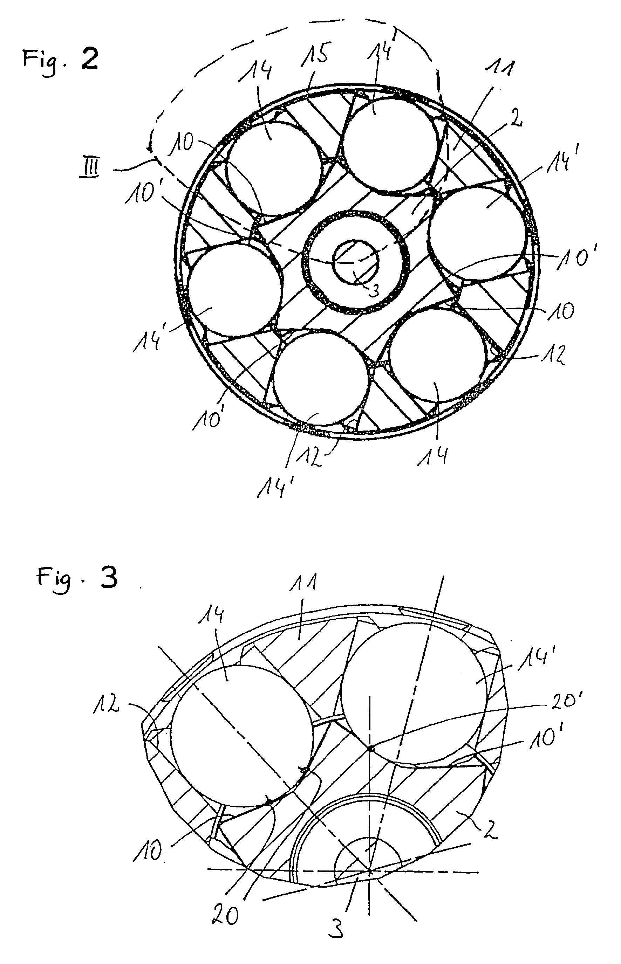

In der Figur 2 ist ein Querschnitt durch das Drehschieberventil der Figur 1 entlang der Linie II-II gezeichnet. Der Querschnitt zeigt den Drehstab 3 in einem Bereich geringer Dicke, der im Betrieb als Torsionsfeder wirkt. Der Drehstab 3 ist umgeben von dem mit Rückwirkungsnuten 10 versehenen Bereich des Drehschiebers 2. Insgesamt sind sechs Rückwirkungsnuten 10 vorgesehen, die sich in achsparalleler Richtung erstrecken. In jeder der Rückwirkungsnuten 10 liegt ein Rückwirkungskörper 14, 14' ein. Während die Rückwirkungskörper 14 und 14' mit konstantem Winkelabstand von 60 Grad über den Umfang des Drehschieberventils verteilt sind, sind die korrespondierenden Rückwirkungsnuten 10 einerseits und 10' andererseits gegeneinander versetzt.

Dies ist in der Figur 3 verdeutlicht, die einen vergrößerten Ausschnitt aus Figur 2 darstellt.

Die Figur 2 und die Figur 3 zeigen die Mittelstellung des Drehschieberventils 1, in der der Drehstab 3 kräftefrei ist. Der Rückwirkungskörper 14 liegt dabei symmetrisch in der Rückwirkungsnut 10 ein und berührt den Drehschieber 2 an zwei Punkten der Nutenflanken gleichzeitig, die in der Figur 3 mit 20 gekennzeichnet sind. Eine Beaufschlagung des Rückwirkungskörpers 14 in Radialrichtung mit Hydraulikdruck führt deshalb in dieser Stellung des Drehschieberventils 1 zu keinem Drehmoment, dass auf den Drehschieber 2 ausgeübt wird.

Die Rückwirkungsnut 10', die in der Figur 3 rechts dargestellt ist, ist in gezeigten Mittelstellung des Drehschieberventils nicht symmetrisch zu dem Rückwirkungskörper 14' ausgerichtet. Der Rückwirkungskörper 14' liegt an einem Berührungspunkt 20' an der Oberfläche der Rückwirkungsnut 10' an. Ein von außen einwirkender Hydraulikdruck, der den Rückwirkungskörper 14' in Richtung auf den Drehstab 3 radial nach innen drängt, bewirkt hier aufgrund der asymmetrischen, einseitigen Anlage an der Oberfläche der Rückwirkungsnut 10' ein Drehmoment entgegen dem Uhrzeigersinn.

Wie in der Figur 2 zu sehen ist, sind insgesamt 4 der Rückwirkungskörper 14' in der Mittelstellung des Drehschieberventils außermittig in der zugehörigen Rückwirkungsnut 10' angeordnet, während zwei Rückwirkungskörper 14 mittig in der zugeordneten Nute 10 einliegen. Bei einem anderen Ausführungsbeispiel kann auch vorgesehen sein, dass alle Rückwirkungskörper in der Mittelstellung außermittig in den jeweils zugeordneten Rückwirkungsnuten einliegen.

Der Satz von Rückwirkungskörpern 13, der axial beabstandet neben den Rückwirkungskörpern 14, 14' in der Figur 1 dargestellt ist, ist grundsätzlich ähnlich aufgebaut wie in Figur 2 und 3 beschriebenen Bauelemente. Es sind zwei in der Mittelstellung mittig in den korrespondierenden Nuten 10 einliegende Rückwirkungskörper 13 vorgesehen. Die (nicht dargestellten) außermittig angeordneten Rückwirkungskörper, die in den Nuten 10' einliegen, liegen jedoch an der jeweils anderen Flanke der Nut 10' an. Dadurch ergibt sich bei Beaufschlagung mit hydraulischen Druck in Radialrichtung ein Drehmoment im Uhrzeigersinn, welches vom Betrag her so groß ist wie das durch die Rückwirkungskörper 14' erzeugte Drehmoment.

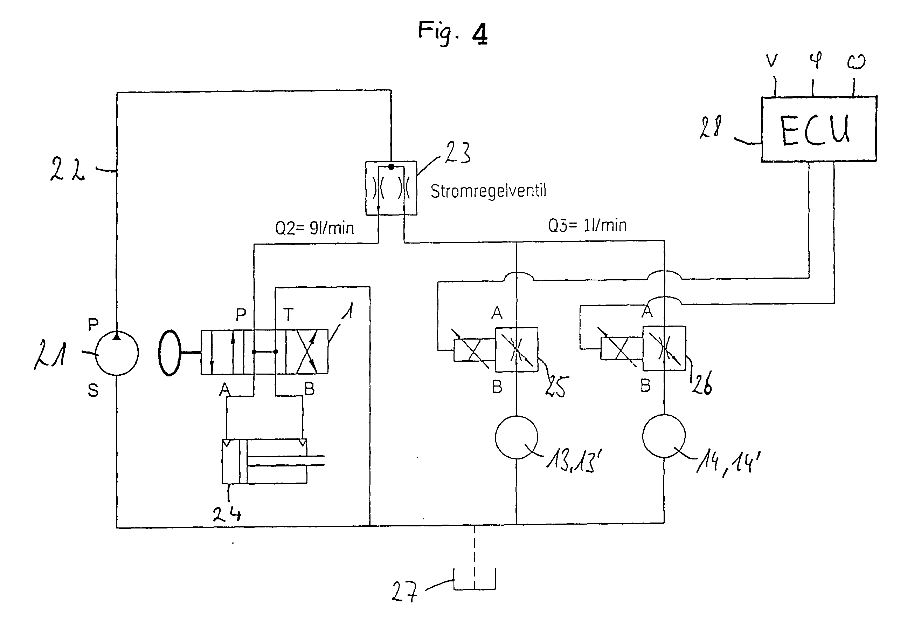

Die Figur 4 zeigt einen hydraulischen Schaltplan für eine Servolenkung mit einem Drehschieberventil nach den Figuren 1-3.

Eine Hydraulikpumpe von der Bauart einer Flügelzellenpumpe ist mit 21 bezeichnet. Sie versorgt über eine Druckleitung 22 und ein Stromregelventil 23 das Drehschieberventil 1 mit Hydraulikfluid. Bei der dargestellten Mittelstellung des Drehschieberventils 1 werden zwei hydraulische Arbeitsräume A und B eines Hydraulikmotors 24 jeweils mit dem gleichen Druck beaufschlagt, so dass keine Servounterstützung erzeugt wird. Wird das Drehschieberventil 1 aus der gezeigten Mittelstellung ausgelenkt, so wird entweder der Arbeitsraum A mit höherem Druck beaufschlagt, was zu einer Bewegung des Hydraulikkolbens nach rechts führt, oder es wird der Arbeitsraum B mit Überdruck beaufschlagt, so dass der Hydraulikkolben nach links verfahren wird. Dies ist die übliche Funktion einer hydraulischen Servolenkung mit Drehschieber mit offener Mitte.

Ein Teilstrom von beispielsweise 10% des gesamten Volumenstroms, der durch das Stromregelventil 23 abgezweigt wird, wird über elektrisch gesteuerte Proportionalventile 25 und 26 auf die hydraulischen Außenräume gegeben, die die Kugeln 13, 13' einerseits und 14, 14' andererseits umgeben. Von dort geht die Hydraulikflüssigkeit in einen Vorratsbehälter 27.

Elektrisch werden die Proportionalventile 25 und 26 von einer Steuerung 28 angesteuert, die verschiedene Fahrzeugdaten auswertet, so beispielsweise die Geschwindigkeit, den Lenkwinkel und die Gierrate des Fahrzeugs.

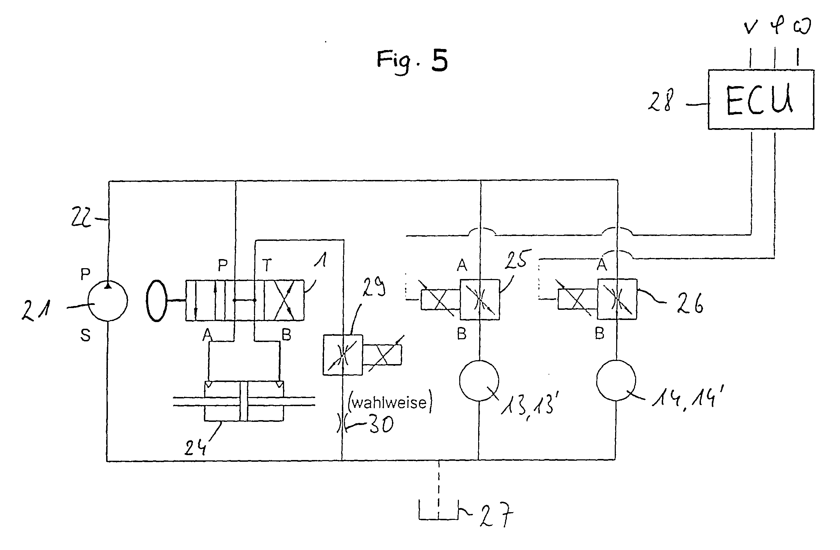

Die Figur 5 zeigt eine ähnliche hydraulische Schaltung wie Figur 4. Gleiche Bauelemente tragen gleiche Bezugsziffern. Allerdings ist bei dieser Variante das Stromregelventil 23 entfallen und wird durch ein weiteres elektrisch gesteuertes Proportionalventil 29 ersetzt. Dieses Proportionalventil 29 im Rücklauf bewirkt einen hydrodynamisch aufgebauten und der Höhe nach steuerbaren Druck auf der Druckseite des Drehschieberventils 1, der dann ebenfalls an den Proportionalventilen 25 und 26 ansteht und der insbesondere auch regelbar ist. Eine Drosselbohrung 30 kann für einen ungeregelten Druckaufbau sorgen.

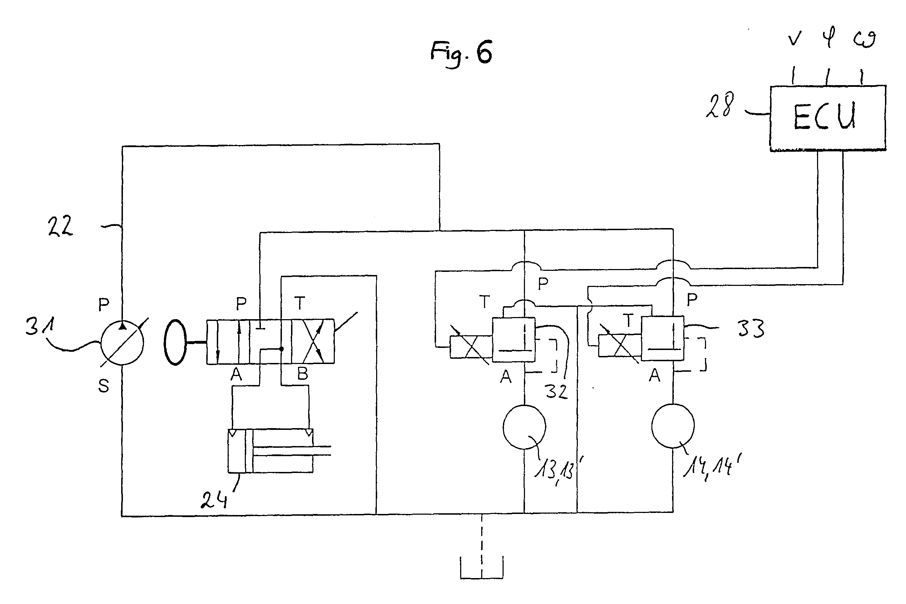

In der Figur 6 ist ein hydraulischer Schaltplan für ein Drehschieberventil mit geschlossener Mitte veranschaulicht. Hier ist eine druckgeregelte Hydraulikpumpe 31 vorgesehen, die einen konstanten Druck in der Leitung 22 erzeugt. Das Drehschieberventil 1 wird bei Öffnung in der einen oder in der anderen Richtung den Druck in einem der beiden Arbeitsräume A oder B anheben und entsprechend den Servomotor 24 betätigen. Die Kugelreihen 13, 13' beziehungsweise 14, 14' werden über Druckminderventile 32, 33 mit dem Hydraulikdruck beaufschlagt. Die Druckminderventile 32, 33 werden wiederum von einer Steuerung 28 in Abhängigkeit von den Signalen für die Geschwindigkeit, den Lenkwinkel und die Gierrate angesteuert.

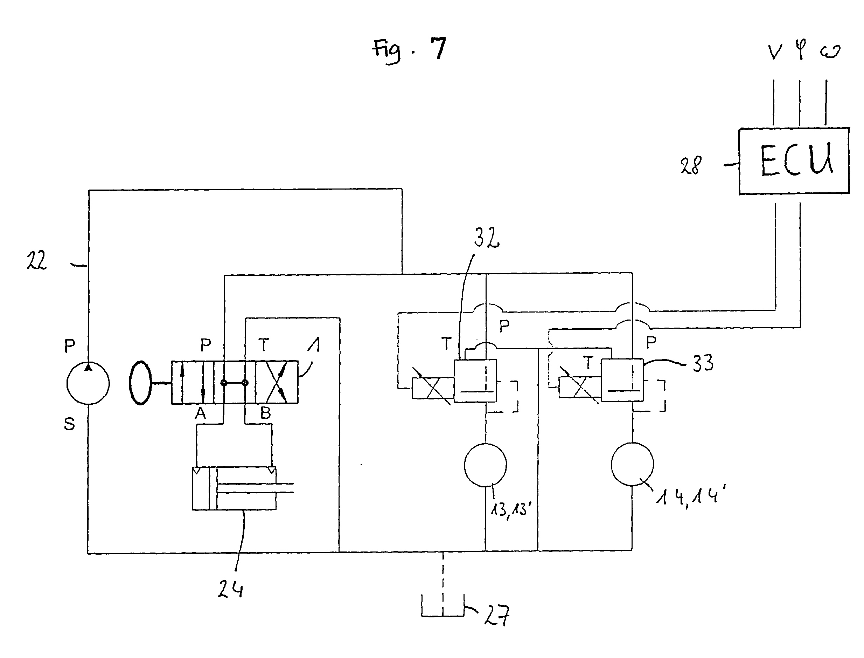

Die Figur 7 zeigt schließlich einen hydraulischen Schaltplan für ein Drehschieberventil mit offener Mitte entsprechend den Figuren 4 und 5 in Kombination mit elektromechanischen Druckminderventilen 32, 33, wie sie in der Figur 6 dargestellt sind. Die Druckminderventile 32, 33 werden wiederum von einer Steuerung 28 in Abhängigkeit von den Signalen für die Geschwindigkeit, den Lenkwinkel und die Gierrate angesteuert. Diese Kombination ist besonders vorteilhaft in Bezug auf die erzielbare Regelgüte. Weiter können die Druckminderventile den maximal auf die Rückwirkungskörper wirkenden Drücke begrenzen und so das hierüber auf die Lenkung wirkende Drehmoment begrenzen. Dieses maximale Drehmoment kann für den Fall einer Störung so niedrig voreingestellt sein, dass es durch die Handkraft des Fahrers jederzeit überwunden werden kann.

In der Praxis arbeitet eine Servolenkung mit den insoweit beschriebenen Drehschieberventil wie folgt:

Zunächst wird im Betrieb über die jeweilige Hydraulikpumpe (21, 31) ein Volumenstrom oder ein Betriebsdruck mit einem Hydraulikfluid in der Leitung 22 bereit gestellt. Wird nun über ein Lenkrad ein Drehmoment in die Verzahnung des Drehschiebers 2 eingeleitet, so wird dieser gegen die Federkraft des Drehstabs 3 gegenüber dem Ritzel 4 verdreht. Das Drehschieberventil erzeugt dann einen Überdruck in einem der Arbeitsräume A oder B, so dass eine Lenkbewegung über dem Servomotor 24 eingeleitet wird.

Ein zusätzliches Drehmoment kann dann in das Drehschieberventil eingeleitet werden, indem die Rückwirkungskörper 13, 13' oder 14, 14' mit Druck beaufschlagt werden. Hierzu werden dann die elektrisch steuerbaren Ventile 25, 32 oder 26, 33 angesteuert.

Das zusätzlich erzeugte Drehmoment kann das aufzuwendende Handmoment am Lenkrad vergrößern oder verkleinern, je nachdem, welche Gruppe von Rückwirkungskörpern mit Druck beaufschlagt wird. Hier ist zwischen zwei Varianten zu unterscheiden:
A. Beide Gruppen von Rückwirkungskörpern 13, 13' und 14, 14' werden gleichzeitig mit Druck beaufschlagt.
   In diesem Fall heben sich die von den außermittig angeordneten Rückwirkungskörpern 13' und 14' erzeugten Drehmomente gegenseitig auf. Die mittig angeordneten Rückwirkungskörpern 13 und 14 erzeugen dann eine hydraulische Rückwirkung. Diese wirkt für den Fahrer als verstärkte Mittenzentrierung.
B. Nur eine Gruppe von Rückwirkungskörpern 13, 13'oder 14, 14' wird mit Druck beaufschlagt.
   Wird nur eine Gruppe mit Druck beaufschlagt, so wird durch die außermittig angeordneten Rückwirkungskörper 13' bzw. 14' ein Drehmoment auf den Drehschieber ausgeübt. Dadurch stellt sich eine Verdrehung zwischen der Steuerbüchse 9 und dem Drehschieber 2 ein. Es ergibt sich ein aktives Drehmoment, was zur Überlagerung der in der Lenkung vorhandenen Momente genutzt wird.
   Ein solcher Eingriff in die Lenkung währen der Fahrt in Abhängigkeit von der Steuerung 28 kann beispielsweise für eine Seitenwindkompensation oder für ein elektronisches Stabilitätsprogramm genutzt werden.

Die Steuerventile können die beschriebenen Drehschieberventile sein, aber auch Flachschieberventile oder Sternventile. Weiter kann die Erfindung sowohl bei Zahnstangenlenkungen als auch bei Kugelumlauflenkungen angewendet werden.

Die Rückwirkungskörper können von anderer geometrischer Form sein, z.B. tonnenförmig oder zylinderförmig. Sie können auch in Axialrichtung mit Hydraulikdruck beaufschlagt und in entsprechende in Axialrichtung offene V-Nuten gedrängt werden.

## Patentansprüche

1. Servolenkung für Kraftfahrzeuge, mit einem von einem Fahrer manuell zu betätigenden Ventil (1), welches eine hydraulisch beaufschlagbare Rückwirkungsanordnung mit Rückwirkungskörpern (13, 13'; 14, 14') und jeweils zugeordneten Rückwirkungsnuten (10, 10') aufweist, wobei wenigstens ein erster Rückwirkungskörper (13') und wenigstens ein zweiter Rückwirkungskörper (14') derart zu den ihnen zugeordneten Rückwirkungsnuten (10') ausgerichtet sind, dass eine Beaufschlagung mit Hydraulikdruck zumindest in der Mittellage und der Mittellage benachbarter Stellung des Ventils (1)
- bei dem ersten Rückwirkungskörper (13') ein Drehmoment in einem ersten Drehsinn und
- bei dem zweiten Rückwirkungskörper (14') ein Drehmoment in einem zweiten, dem ersten Drehsinn entgegen gerichteten Drehsinn erzeugt.

2. Servolenkung nach Anspruch 1, **dadurch gekennzeichnet, dass** die Drehmomente in dem ersten und dem zweiten Drehsinn in jeder Stellung des Ventils (1) erzeugbar sind.

3. Servolenkung nach einem der vorhergehenden Ansprüche, **dadurch gekennzeichnet, dass** zur Beaufschlagung der Rückwirkungskörper (13, 13'; 14, 14') elektrisch steuerbare Proportionalventile (25, 26) vorgesehen sind.

4. Servolenkung nach einem der vorhergehenden Ansprüche, **dadurch gekennzeichnet, dass** zur Beaufschlagung der Rückwirkungskörper (13, 13'; 14, 14') elektrisch steuerbare Druckminderventile (32, 33) vorgesehen sind.

## Claims

1. Power steering system for motor vehicles, with a valve (1) which can be actuated manually by a driver and which comprises a hydraulically pressurisable reaction arrangement with reaction bodies (13, 13'; 14, 14') and reaction grooves (10, 10') allocated thereto, wherein at least one first reaction body (13') and at least one second reaction body (14') are oriented to their allocated reaction grooves (10') such that, with the valve (1) at least in the middle position and the position next to the middle position, pressurisation with hydraulic pressure generates
- on the first reaction body (13') a torque in a first direction of rotation and
- on the second reaction body (14') a torque in a second direction of rotation opposite to the first direction of rotation.

2. Power steering system according to Claim 1, **characterised in that** the torques in the first and second directions of rotation can be generated in any position of the valve (1).

3. Power steering system according to any one of the preceding claims, **characterised in that** to pressurise the reaction bodies (13, 13'; 14, 14'), electrically controllable proportional valves (25, 26) are provided.

4. Power steering system according to any one of the preceding claims, **characterised in that** to pressurise the reaction bodies (13, 13'; 14, 14'), electrically controllable pressure-reducing valves (32, 33) are provided.

## Revendications

1. Direction assistée pour véhicules, comportant une soupape (1) actionnée manuellement par un conducteur, qui présente un dispositif de rétroaction pouvant être alimenté hydrauliquement comportant des corps de rétroaction (13, 13'; 14, 14') et des gorges de rétroaction associées respectives (10, 10'), dans laquelle au moins un premier corps de rétroaction (13') et au moins un second corps de rétroaction (14') sont orientés vers les gorges de rétroaction (10') qui leur sont associées, en ce qu'une alimentation en pression hydraulique génère au moins dans la position moyenne et dans la position adjacente à la position moyenne de la soupape (1)
- un couple dans le premier sens de rotation dans le cas du premier corps de rétroaction (13') et
- un couple dans un second sens de rotation opposé au premier sens de rotation dans le cas du second corps de rétroaction (14').

2. Direction assistée selon la revendication 1, **caractérisée en ce que** les couples peuvent être générés dans le premier et le second sens de rotation dans chaque position de la soupape (1).

3. Direction assistée selon l'une des revendications précédentes, **caractérisée en ce que** des soupapes proportionnelles pouvant être commandées électriquement (25, 26) sont prévues pour l'alimentation des corps de rétroaction (13, 13' ; 14, 14').

4. Direction assistée selon l'une des revendications précédentes, **caractérisée en ce que** des soupape de réduction de pression pouvant être commandées électriquement (32, 33) sont prévues pour l'alimentation des corps de rétroaction (13, 13' ; 14, 14').
